# EUROPEAN PATENT SPECIFICATION

(11) **EP 0 692 521 B1**
(45) Date of publication and mention of the grant of the patent: **05.01.2000**
(21) Application number: 94305145.8
(22) Date of filing: 13.07.1994
(51) Int. Cl.: C08L 59/00, C08K 5/00

(54) **Weather-resistant polyacetal resin composition**
Witterungsbeständige Polyacetalharzzusammensetzung
Composition de résine de polyacétal résistant aux intempéries

(43) Date of publication of application: 17.01.1996
(73) Proprietor: POLYPLASTICS CO. LTD., Chuo-Ku Osaka-shi Osaka 541 (JP)
(72) Inventor: Katsumata, Toru, Fuji-shi, Shizuoka (JP); Matsunaga, Nobuyuki, Fuji-shi, Shizuoka (JP)
(74) Representative: Jackson, Peter

(56) References cited:
- EP-A- 0 390 146
- EP-A- 0 412 840
- EP-A- 0 494 534
- EP-A- 0 519 749
- EP-A- 0 558 279

## Description

The present invention relates to a polyacetal resin composition having excellent weather resistance and reduced surface gloss. More particularly, the present invention is concerned with a polyacetal resin composition which comprises a polyacetal resin and, compounded therewith, a weathering (light) stabilizer, a specific core-shell polymer and a specific oxyalkylene polymer, and which has excellent weather resistance and reduced surface gloss while maintaining the good mechanical properties, including frictional wear resistance and moldability, inherent in polyacetal resins. The invention further relates to a molded article formed from the said composition.

As well known in the art, polyacetal resin has been utilized in recent years in many and varied fields as an engineering resin with excellent physical properties such as mechanical and electrical properties and with excellent chemical properties such as chemical and heat resistance. However, there are cases where further special properties are required of the polyacetal resin as its fields of application are expanded. Thus, the development of a polyacetal resin having excellent weather resistance and reduced molded article surface gloss is now demanded in the art. For example, there are cases where a polyacetal resin having a low gloss, i.e., exhibiting a decreased light reflection, is required for suppressing the stimulation to eyes attributed to light reflection so as to provide the appearance of a high-grade article and to prevent malfunction attributed to light reflection from equipment in such fields as optical instruments and automobile components.

The use of various types of materials in combination is now increasing in the fields of general electrical equipment and building materials in accordance with their respective objectives. However, the surface gloss of the polyacetal resin is high as compared with those of other general resin materials, so that the harmony therebetween is poor in products comprising various materials. As a result the use of polyacetal resin has been limited in those fields in which great importance is attached to surface appearance. Moreover, because they are used applied to outdoor applications the above materials must also provide and maintain excellent weather resistance.

It is known to address these demands by adding an inorganic filler such as calcium carbonate, talc and calcium silicate to the polyacetal resin. However, the filler must be incorporated in the polyacetal resin in a large amount to attain a desirable gloss-lowering effect with the result that the weather resistance of the polyacetal resin is much reduced and a whitening of the resin occurs. A further disadvantage is that the incorporation of a large amount of filler lowers the resin's mechanical properties, such as elongation and toughness, to such an extent that if an article molded from the resin is subjected to a shock or stress during post-treatment, assembly or general handling, the article is easily broken.

The technique comprising graining the surface of a mold and transferring the resultant grain pattern to the surface of the molded article has generally been employed for the purpose of lowering the surface gloss of the molded article. With respect to the polyacetal resin, however, the current situation is that the transferability of the pattern to the surface of the molded article is too poor to obtain a satisfactory effect presumably because of the high surface gloss and high crystallinity of the polyacetal resin.

Therefore a demand has remained for the development of a polyacetal resin material with excellent mechanical properties, especially elongation and toughness, and a lowered surface gloss while maintaining excellent weather resistance.

The present inventors have made extensive and intensive studies with a view toward developing a polyacetal resin material having an excellent weather (light) resistance and exhibiting a markedly lowered gloss on the surface of the molded article without sacrificing the properties inherent in the polyacetal resin as much as possible. As a result, the present invention has been completed.

Thus, the present invention relates to a weather-resistant polyacetal resin composition having a low gloss comprising:
(A) 100 parts by weight of a polyacetal resin, and compounded therewith,
(B) 0.01 to 5 parts by weight of at least one weathering (light) stabilizer selected from among (1) a benzotriazole compound, (2) a benzophenone compound, (3) an oxanilide compound, (4) an aromatic benzoate compound, (5) a cyanoacrylate compound and (6) a hindered amine compound,
(C) 1 to 50 parts by weight of a core-shell polymer comprising a core of a rubber-like polymer and a shell of a glassy polymer comprised of a vinyl copolymer having an oxygen-containing polar group, and
(D) 0.1 to 10 parts by weight of an oxyalkylene polymer having 2 to 8 carbon atoms adjacent to each other in the chain.

The present invention also relates to a molded article of the above polyacetal resin composition having a surface gloss of 30% or less, measured as described below.

The components of the composition of the present invention will now be described in greater detail.

First, the polyacetal resin to be used as the component (A) in the present invention is a polymeric compound having major structural units each composed of an oxymethylene group of the formula CH₂O-. The polyacetal resin may be an oxymethylene homopolymer or a copolymer, terpolymer or block copolymer comprising oxymethylene group units and a small proportion of other structural units. Further, the molecule of the polyacetal resin may be linear, or have a branched or crosslinked structure. There is no particular limitation with respect to the degree of polymerization of the polyacetal resin.

Examples of the weathering stabiliser compounds (B) are set forth below.

Examples of the benzotriazole compounds (1) include
2-(2'-hydroxy-5'-methylphenyl)benzotriazole,
2-(2'-hydroxy-3',5'-di-t-butylphenyl)benzotriazole,
2-(3,5-di-t-amyl-2-hydroxyphenyl)benzotriazole,
2-(2'-hydroxy-3',5'-diisoamylphenyl)benzotriazole,
2-[2-hydroxy-3,5-bis(α,α-dimethylbenzyl)phenyl]-benzotriazole
and 2-(2'-hydroxy-4'-octoxyphenyl)- benzotriazole.

Examples of the benzophencne compounds (2) include 2,4-dihydroxybenzophenone, 2-hydroxy-4- methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxy-benzophenone, 2-hydroxy-4-methoxy-5-sulfobenzophenone and 2-hydroxy-4-oxybenzylbenzophenone.

Examples of the oxanilide compounds (3) include N-(2-ethylphenyl)-N'-(2-ethoxy-5-t-butylphenyl)oxamide and N-(2-ethylphenyl)-N,-(2-ethoxyphenyl)oxamide.

Examples of the aromatic benzoate compounds (4) include p-t-butylphenyl salicylate and p-t-octylphenyl salicylate.

Examples of the cyanoacrylate compounds (5) include 2-ethylhexyl 2-cyano-3,3-diphenylacrylate and ethyl 2-cyano-3,3-diphenylacrylate.

The hindered amine compounds (6) are piperidine derivatives each having a sterically hindering group, examples of which include 4-acetoxy-2,2,6,6-tetra- methylpiperidine, 4-stearoyloxy-2,2,6,6-tetramethyl- piperidine, 4-acryloyloxy-2,2,6,6-tetramethyl- piperidine, 4-methoxy-2,2,6,6-tetramethylpiperidine, 4-benzoyloxy-2,2,6,6- tetramethylpiperidine, 4-cyclohexyloxy-2,2,6,6-tetramethyl- piperidine, 4-phenoxy-2,2,6,6-tetramethylpiperidine, 4-benzyloxy-2,2,6,6-tetramethylpiperidine, 4-(phenyl- carbamoyloxy)-2,2,6,6-tetramethylpiperidine, bis(2,2,6,6- tetramethyl-4-piperidyl) oxalate, bis(2,2,6,6- tetramethyl- 4-piperidyl) malonate, bis(2,2,6,6- tetramethyl-4-piperidyl) adipate, bis(2,2,6,6-tetramethyl-4-piperidyl) sebacate, bis(1,2,2,6,6-pentamethyl-4-piperidyl) sebacate, bis(2,2,6,6- tetramethyl-4-piperidyl) terephthalate, 1,2-bis-(2,2,6,6- tetramethyl-4-piperidyloxy)ethane, bis(2,2,6,6-tetramethyl-4-piperidyl) hexamethylene 1,6-dicarbamate, bis(l-methyl-2,2,6,6-tetramethyl-4-piperidyl) adipate and tris(2,2,6,6- tetramethyl-4-piperidyl) benzene-1,3,5-tricarboxylate. Further, use may be made of high-molecular-weight piperidine derivative polycondensates, such as polycondensates of dimethyl succinate and l-(2-hydroxyethyl)-4-hydroxy-2,2,6,6-tetramethylpiperidine.

At least one member selected from among the above weathering (light) stabilizers is preferably incorporated in the composition of the present invention. In particular, it is preferred to employ the weathering stabilizers (1) to (5) in combination with the hindered amine substance (6), especially to employ the benzotriazole compound (1) in combination with the hindered amine compound (6).

The weathering (light) stabilizer as the component (B) is added suitably in an amount ranging from 0.01 to 5 parts by weight, preferably ranging from 0.02 to 3 parts by weight, per 100 parts by weight of the component (A). When the amount is too small, the attainment of the desired effect cannot be expected. On the other hand, the addition in aimless excess brings about not only economic disadvantage but also problems such as deterioration of the mechanical properties of the composition and staining of the mold.

The core-shell polymer to be used in the present invention comprises a core of a rubber-like polymer and a shell of a glassy polymer comprised of a vinyl copolymer having an oxygen-containing polar group. The core-shell polymer can be obtained by the seed emulsion polymerization technique, particularly the successive multistage emulsion polymerization technique in which a prestage polymer is successively covered by a poststage polymer. If the core-shell polymer has an intermediate phase as will be described later, occasionally, the intermediate phase is formed by the multistage emulsion polymerization technique in which a poststage polymer penetrates into a prestage polymer.

In the particulate-forming polymerization, it is preferred that a monomer, a surfactant and water be placed in a reactor, and subsequently a polymerization initiator be added thereto to initiate an emulsion polymerization reaction.

The first-stage polymerization is a reaction for forming a rubber-like polymer.

The monomer suitable for composing the rubber-like polymer is, for example, a conjugated diene, an alkyl acrylate in which the alkyl group has 2 to 8 carbon atoms, or a mixture thereof.

Polymerization of the above monomer forms the rubber-like polymer.

Examples of the above dienes include butadiene, isoprene and chloroprene. Examples of the above alkyl acrylates in which the alkyl groups individually have 2 to 8 carbon atoms include ethyl, propyl, butyl, cyclohexyl and 2-ethylhexyl acrylates. Of the rubber-like polymers, polybutyl acrylate is especially preferred.

In the first-stage polymerization, the conjugated diene or the alkyl acrylate may be copolymerized with a monomer copolymerizable therewith, e.g., an aromatic vinyl such as styrene, vinyltoluene or a-methylstyrene, an aromatic vinylidene, a vinyl cyanide such as acrylonitrile or methacrylonitrile, a vinylidene cyanide or an alkyl methacrylate such as methyl or butyl methacrylate.

When the monomers do not contain a conjugated diene or when a conjugated diene is contained but the amount thereof is less than 20% by weight relative to the total monomer amount in the first-stage polymerization, a polymer having high impact resistance can be obtained by adding a small amount of a crosslinking or grafting monomer.

As the above crosslinking monomer, use is made of, for example, an aromatic divinyl monomer such as divinylbenzene, and an alkanepolyol polyacrylate or polymethacrylate such as ethylene glycol diacrylate, ethylene glycol dimethacrylate, butylene glycol diacrylate, hexanediol diacrylate, hexanediol dimethacrylate, oligoethylene glycol diacrylate, oligoethylene glycol dimethacrylate, trimethylol- propane dimethacrylate and trimethylolpropane trimethacrylate. Of these, butylene glycol diacrylate and hexanediol diacrylate are especially preferred.

As the above grafting monomer, use is made of, for example, an unsaturated carboxylic acid allyl ester such as allyl acrylate, allyl methacrylate, diallyl maleate, diallyl fumarate and diallyl itaconate. Of these, allyl methacrylate is especially preferred.

The above crosslinking or grafting monomer is used in an amount ranging from 0 to 5% by weight, preferably from 0.1 to 2% by weight relative to the total monomer amount in the first-stage polymerization.

The shell phase is formed of a glassy polymer composed of a vinyl copolymer having an oxygen-containing polar group.

In the present invention, examples of the above oxygen-containing polar groups include a hydroxyl group, a group (e.g., glycidyl group) having an ether bond (-O-), an amide group (-CONH-), an imide group 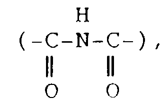 and a nitro group (-NO₂). Of these, a hydroxyl group and a group having an ether bond are especially preferred.

The core-shell polymer whose shell phase has no oxygen-containing polar group has substantially no matting effect (gloss lowering effect) recognized. Even if an oxygen-containing polar group is contained, the vinyl polymer particles not formed into the core-shell structure according to the present invention only exert a matting effect which is recognizable but not satisfactory.

For example, a (meth)acrylate of an alcohol having at least two oxygen-containing polar groups in its molecule is used as a monomer composing the above vinyl copolymer having an oxygen-containing polar group. The alcohol having at least two oxygen- containing polar groups in the molecule is an alcohol having an alcoholic hydroxyl group plus at least one other oxygen-containing polar group. As the (meth)acrylate of an alcohol having an oxygen-containing polar group, use is made of, for example, a (meth)acrylate of an alcohol having a hydroxyl group and/or a glycidyl group.

The (meth)acrylate of an alcohol having a hydroxyl group is, for example, selected from among hydroxyethyl (meth)acrylate and hydroxypropyl (meth)acrylate. Of these, hydroxyethyl (meth)acrylate is preferred.

The (meth)acrylate of an alcohol having a glycidyl group is, for example, glycidyl (meth)acrylate. Of these, glycidyl methacrylate is preferred.

Further, vinyl monomers each having an oxygen-containing polar group other than the above (meth)acrylates, such as allyloxyethanol and allyl glycidyl ether, may also by used as the component composing the above vinyl copolymer having an oxygen-containing polar group.

Monomers other than the above monomers each having an oxygen-containing polar group may be used to compose the glassy polymer, which include, for example, alkyl (meth)acrylates such as methyl, ethyl and butyl (meth)acrylates, aromatic vinyls such as styrene, vinyltoluene and α-methylstyrene, aromatic vinylidenes, vinyl cyanides such as acrylonitrile and methacrylonitrile, vinylidene cyanide and other vinyl polymerizable monomers. Of these, methyl methacrylate and styrene-acrylonitrile are especially preferred.

It is preferred that the proportion of the shell phase to the entire core-shell polymer be in the range of 10 to 50% by weight. When the proportion of the shell phase is below the above range, the weather resistance of the core-shell polymer is poor. On the other hand, when it is above this range, it is likely that the resin composition obtained by melt mixing the formed core-shell polymer may have poor mechanical properties.

An intermediate phase may be present between the first-stage polymer phase and the final polymer phase. For example, the intermediate phase may be formed by carrying out the seed emulsion polymerization of a polymerizable monomer having a functional group, such as glycidyl methacrylate, methacrylic acid and hydroxyethyl methacrylate, a polymerizable monomer capable of forming the glassy polymer, such as methyl methacrylate, or a polymerizable monomer capable of forming the rubber-like polymer, such as butyl acrylate.

An intermediate phase may be selected depending on the desired properties of the core-shell polymer.

The above intermediate-phase-bearing core-shell polymer may have various structures, for example, a multilayer structure in which another layer is present between the core and the shell and a salami-like structure in which the intermediate phase is dispersed in the form of fine particles in the core. In extreme forms of the core-shell polymer having the salami-like structure, the intermediate phase to be dispersed may compose a new core in the center of the above core. The core-shell polymer having this structure may be formed when a monomer whose typical example is styrene is used for composing the intermediate phase.

The use of the core-shell polymer having the intermediate phase may improve the impact resistance and the flexural modulus of elasticity, raises the thermal deformation temperature, and improve the appearance (inhibition of surface peeling and pearly gloss and tone change through refractive index change) of the final polyacetal resin composition.

In the present invention, the emulsion polymerization is conducted in the presence of a surfactant such as nonionic, oligomeric anionic and oligomeric nonionic surfactants, and in the presence of an initiator such as azoic and peroxidic initiators.

Most of the customarily employed nonionic surfactants may be used in the present invention, which include, for example, ethers such as polyoxyethylene nonylphenyl ether, polyoxyethylene stearyl ether and polyoxyethylene lauryl ether, esters such as polyoxyethylene monostearate, sorbitan esters such as polyoxyethylene sorbitan monolaurate, and block polymers such as polyoxyethylene polyoxypropylene block copolymer.

The oligomeric anionic or nonionic surfactant suitable for use in the present invention is one employed in the preparation of an emulsion polymer for special uses, which includes, for example, the oligomeric surfactant represented by the following formula:

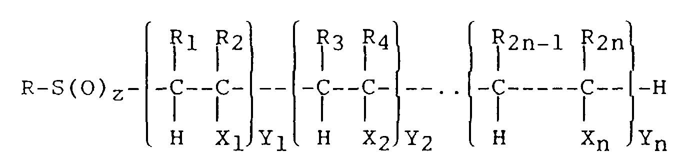

In the above formula, R represents an alkyl group having 5 to 20, preferably 6 to 12 carbon atoms, n is an integer of 2 or greater, and z is 0, 1 or 2, preferably 0 or 1, more preferably 0. Each of R₂ₙ₋₁s represents -H, -CH₃, -C₂H₅ or -COOH, and each of R2ₙs represents -H, -CH₃, -C₂H₅, -COOH or -CH₂COOH. Xₙ represents -COOH, -CONH₂, -OCH₃, -OC₂H₅, -CH₂OH, 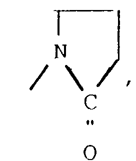 -COOC₂H₄OH, -COOC₃H₆OH, -CONHCH₂OH, -CONHCH₃, -CONHC₂H₅, -CONHC₃H₇, -COOCH₃, -COOC₂H₅, -CN, -OCOCH₃, -OCOC₂H₅, or

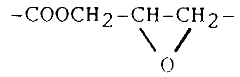

The oligomeric surfactant suitable for use in the present invention has a molecular weight of about 200 to 5000, preferably about 1500 to 3000, and its degree of polymerization 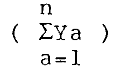 is in the range of about 6 to 50.

The oligomeric surfactant is either intrinsically water-soluble, or reacted with an oxide, a hydroxide or an alcohol to be thereby converted into a watersoluble salt.

Examples of the above water-soluble salts include alkali metal, alkaline earth metal, Group III heavy metal, ammonium and substituted ammonium salts. Of these, ammonium salts are especially preferred.

The above oligomeric surfactant may be obtained either by conducting an addition polymerization of an appropriate monomer in an anhydrous solvent in the presence of an alkyl mercaptan as described in, for example, Japanese Patent Publication No. 34832/1972, or by further conducting an oxidation into the corresponding sulfoxide or sulfone with the use of hydrogen peroxide or ozone.

The above alkyl mercaptan is, for example, selected from among n-octyl mercaptan, n-dodecyl mercaptan, t-dodecyl mercaptan and n-decyl mercaptan.

As the above monomer, use is made of an α,β-ethylenically unsaturated monomer having at least one polar group in its molecule, such as (meth)acrylic acid, α-ethylacrylic acid, β-methylacrylic acid, α,β-dimethylacrylic acid, caproic acid, itaconic acid, fumaric acid, maleic acid, (meth)acrylamide, vinyl ethyl ether, vinyl methyl ether, allyl alcohol, vinylpyrrolidone, (meth)acrylonitrile, ethylacrylonitrile, methyl (meth)acrylate, ethyl acrylate, hydroxyethyl (meth)acrylate, hydroxypropyl (meth)acrylate, vinyl acetate, vinyl propionate, N-isopropylacrylamide, N-ethylacrylamide, N-methylacrylamide, glycidyl (meth)acrylate and N-methylolacrylamide.

In the above addition polymerization, lower alkanols such as methanol, ethanol and isopropanol are preferably used as the catalyst.

The addition polymerization is generally performed at about 20 to 100°C.

In the present invention, the amount of addition of the surfactant is appropriately selected taking its capability of stabilizing particles into account.

Examples of the initiators suitable for use in the present invention include azoic initiators such as azobisisobutyronitrile, dimethyl 2,2'-azobisisobutyrate and 2,2'-azobis(2-aminopropane) dihydrochloride, and peroxidic initiators such as cumene hydroperoxide, diisopropylbenzene hydroperoxide and hydrogen peroxide. These may be used either individually or in combination.

The emulsion polymerization in a reaction system in which the above nonionic and/or oligomeric surfactant is employed together with the azoic and/or peroxidic initiator produces a core-shell polymer which is substantially free from any sulfur oxide compounds or contains, if any, only an extremely minute amount thereof.

The content of the sulfur oxide compounds (e.g., salts of sulfuric acid, sulfuric ester, persulfuric acid, sulfurous acid and sulfonic acid) is on such a level as cannot be detected by the conventional qualitative test for sulfur oxide compounds.

For example, the qualitative test (qualitative test for sulfate ion) is conducted as follows. 5 g of a sample (core-shell polymer) is weighed into a 50-ml Erlenmeyer flask. 20 ml of deionized water is added and agitated with a magnetic stirrer for 3 hr. The mixture is filtered through filter paper No. 5C. The obtained filtrate is halved, and 0.5 ml of a 1% aqueous barium chloride solution is added to one of the divisions. A visual turbidity comparison is made between the barium-chloride-containing division and the control division to which no barium chloride has been added.

The core-shell polymer that is substantially free from any sulfur oxide compounds can be stably melt blended with the polyacetal resin to thereby form a polyacetal resin composition which is excellent in matting effect, thermal stability, impact resistance and elongation properties.

The core-shell polymer according to the present invention can be obtained in granular, flaky or powdery form by, for example, the following method.
(1) A latex is produced in the presence of the above surfactant and initiator according to the conventional seed emulsion polymerization technique.
(2) A polymer is separated from the latex by freezing and thawing.
(3) The separated polymer is subjected to centrifugal dehydration and drying.

Most of the solvent and surfactant used in the emulsion polymerization can be removed by these isolating operations.

Alternatively, the latex may be dried as it is in the step (2) for use.

Also, the spray drying method using a spray drier can be utilized to separate the core-shell polymer from the latex.

The separated core-shell polymer may either be further pelletized by an extruder and a pelletizer, or melt mixed as it is with a polyacetal resin.

In the present invention, the core-shell polymer is added in an amount on 1 to 50, preferably 3 to 20, parts by weight to 100 parts by weight of the polyacetal resin. When the amount of the core-shell polymer is too small, the desired surface gloss lowering effect cannot be fully exhibited. On the other hand, the addition of the core-shell polymer in aimless excess causes a substantial lowering of the mechanical properties, especially the rigidity, of the final composition and further affects adversely the thermal stability of the composition.

The addition of the core-shell polymer as the component (C) together with the weathering (light) stabilizer as the component (B) to the polyacetal resin not only uniformly lower the surface gloss of the molded article to provide the appearance of a composed high-grade article but also improves the weather resistance of the composition without detriment to the excellent mechanical properties inherent in the polyacetal resin. However, the weather-resistance-improving effect is still not satisfactory depending on uses.

Thus, the present invention is characterized by comprising the oxyalkylene polymer having 2 to 8 carbon chains adjacent to each other as the component (D) in addition to the above components (A), (B) and (C). The blending of the components (A), (B), (C) and (D) together is highly effective in improving the weather (light) resistance (especially, cracking) without detriment to the well-balanced properties inherent in the polyacetal resin per se.

Examples of the oxyalkylene polymers each having 2 to 8 carbon chains adjacent to each other and suitable for use as the component (D) in the present invention in accordance with the above object include poly(ethylene oxide), poly(propylene oxide), poly(butylene 1,2-oxide), polyoxolane, polyoxane, polyoxepane, polyoxocane, polyoxonane, ethylene oxide/propylene oxide copolymer and ethylene oxide/oxolane copolymer. Herein, the term "copolymer" means a random, block or graft copolymer or a mixture thereof. Each of the employed oxyalkylene polymers has a molecular weight (number-average) ranging from 500 to 200,000, preferably from 4,000 to 50,000. Of the above oxyalkylene polymers, those each having 2 to 4 carbon chains adjacent to each other are preferred, which include poly(ethylene oxide), poly(propylene oxide), poly(butylene 1,2-oxide), polyoxolane and ethylene oxide/propylene oxide copolymer. Of these, poly(ethylene oxide), poly(propylene oxide) and ethylene oxide/propylene oxide copolymer are especially preferred.

The oxyalkylene polymer as the component (D) is suitably added in an amount of 0.1 to 10, preferably 2 to 6 parts by weight to 100 parts by weight of the polyacetal resin as the component (A). When the amount of the addition is less than 0.1 part by weight, the effect of improving the weather (light) resistance is slight. On the other hand, when the amount of the addition is greater than 10 parts by weight, the improving effect reaches a saturation and the addition is rather detrimental to the properties inherent in the polyacetal resin.

The addition of the oxyalkylene polymer (D) to the polyacetal resin either individually or in combination with the weathering (light) stabilizer (B) or the core-shell polymer (C) is not so effective in improving the weather (light) resistance of the composition. However, the simultaneous addition of the three components ( B + C + D) to the polyacetal resin exhibits marked improving effects. That is, the effects of not only lowering uniformly the gloss of the surface of the molded article but also suppressing the cracking of the molded article surface and further minimizing the discoloration of the composition are brought about by the above simultaneous addition.

These functions and effects are presumed to be brought about by the capabilities of the oxyalkylene polymer (D) of compatibilizing with both the polyacetal resin (A) and the core-shell polymer (C) and further increasing the fluidity of the core-shell polymer (C) so as to facilitate the gathering thereof on the surface of the molded article.

With respect to the gloss lowering effect, it is believed that the core-shell polymer is dispersed in the form of particles each having a size of about 0.5 to 2 µm in the surface layer of the molded article obtained by blending the core-shell polymer with the polyacetal resin so as to roughen the surface of the polyacetal resin and to simultaneously modify the surface of the molded article of the polyacetal resin by virtue of the uniform dispersion of oxygen- containing polar groups in the surface layer, thereby realizing a low gloss. Practically, the surface gloss of the polyacetal resin composition is preferably 30% or less, still preferably 25% or less, further still preferably 20% or less as measured by the method (using a specular mold) which will be described below in the Examples. Recently, most interior parts have grains called leather grain and satin emboss in accordance with the demand for automobile trims with higher-grade appearances and in order to ameliorate the touch. Thus, it is required not only to lower the gloss of the specular surface but also to ensure effective pattern transfer to the surface to be grained. The conventional polyacetal resin exhibits poor pattern transfer and also poor gloss lowering on this surface as compared with that on the specular surface, possibly because of the high crystallinity thereof. By contrast, the composition of the present invention ensures highly improved pattern transfer to the surface to be grained and further increased gloss lowering on the grained surface as a result of the modification of the surface of the molded polyacetal resin article.

The molded article of the present invention preferably has a grained surface formed by molding the resin composition by means of an injection machine equipped with a mold having a grained inner surface. Herein, the term "grained molded article" comprehends molded articles each having a partially or entirely grained surface. Accordingly, the employed mold may have an inner surface partially or entirely grained in conformity with the particular purpose. The graining of the inner surface of the mold can be performed by corrosion working such as chemical etching, electric discharge machining or the like. For the grain pattern, an appropriate surface roughness is selected depending on the desired molded article appearance.

It is preferred that a coloring component such as the following dyes and pigments be added as the component (E) to the composition of the present invention.

The types of the employed dyes and pigments are not particularly limited, and any one may be selected for use from those customarily added to the conventional polyacetal compositions. Preferred examples of the dyes include anthraquinone dyes. Preferred examples of the pigments include azo, phthalocyanine, perylene, quinacridone, anthraquinone, indoline, titanium, iron oxide and cobalt pigments as well as carbon black. These coloring components may be used either individually or in combination.

In particular, when carbon black is added as the coloring component, the weather resistance of the composition is effectively further increased. Any carbon blacks conventionally employed for plastic coloring may be used in the present invention, which include Micronex, acetylene black and Ketjen black.

The coloring component as the component (E) is added to the composition of the present invention preferably in an amount of 0.1 to 10, especially 0.3 to 3 parts by weight per 100 parts by weight of the polyacetal resin. When the amount of the addition is less than 0.1 part by weight, the coloring effect cannot be fully exhibited. There is no need for the addition of the coloring component in an amount exceeding 10 parts by weight, and the addition in too much an amount rather deteriorates the thermal stability and other properties of the resultant composition.

Further, it is preferred that various conventional stabilizers be added to the composition of the present invention in order to reinforce the thermal stability thereof. For this purpose, it is desirable to add at least one member selected from among the conventional antioxidants and nitrogenous and alkali and alkaline earth metal compounds.

Still further, at least one member selected from among the various conventional additives, for example, a lubricant, a nucleating agent, a mold releasing agent, an antistatic agent and other surfactant, organic polymer materials other than the component (C) and organic or inorganic fibrous, particulate and platy fillers, may be added to the composition of the present invention in order to impart the desired properties in accordance with the intended object.

The composition of the present invention can be prepared by the use of the conventional equipment and method generally known as useful for preparing synthetic resin compositions. That is, the appropriate components may be mixed, and kneaded and extruded by means of a single-screw or twin-screw extruder to obtain pellets, followed by molding. Alternatively, the preparation of the composition can be conducted simultaneously with the molding by the use of a molding machine. Still alternatively, part or the whole of the resin components may be pulverized, mixed and melt extruded to obtain pellets, followed by molding.

The above stabilizers and additives may be incorporated at any stage of the process. Naturally, they may be added and mixed just prior to obtaining the final molded article.

The resin composition of the present invention can be molded by the use of any of extrusion, injection molding, compression molding, vacuum forming, blowing and expansion molding techniques.

As apparent from the foregoing description, the composition of the present invention comprising a polyacetal resin and, compounded therewith, a weathering stabilizer and specific core-shell and oxyalkylene polymers exhibited surprising effects, i.e., had an excellent weather resistance (particularly, extremely retarded in cracking time) and a markedly lowered gloss on the surface of the molded article while maintaining the well-balanced mechanical properties inherent in polyacetal.

Therefore, the polyacetal resin composition having a low gloss according to the present invention can suitably be used in automobile trims (e.g., regulator handles, interior clips and ventilator knobs) which require weather (light) resistance while disfavoring light reflection to provide an appearance of a high-grade article, and further in optical instruments, building materials, household utensils, etc.

### Examples

The present invention will now be illustrated with reference to the following Examples, which should not be construed as limiting the scope of the invention. The term "part" used in the Examples and Comparative Examples means part by weight without exception. In the Examples, the surface condition and mechanical properties were evaluated by the following methods.

### (1) Surface Condition

Each surface condition was evaluated with respect to the matte effect and surface uniformity, and graded into one of ranks 1 to 4. The smaller the rank number, the superior the matte effect and surface uniformity.
- Rank 1:: the profile of a fluorescent lamp was not observed on the sample when the lamp was arranged above the sample and light therefrom was reflected by the sample, and the surface of the sample was uniformly roughened.
- Rank 2:: the profile of the fluorescent lamp was not observed on the sample, but the surface of the sample was roughened with irregular unevenness.
- Rank 3:: the profile of the fluorescent lamp was observed, although it was unclear.
- Rank 4:: the profile of the fluorescent lamp was clearly observed, and substantially no unevenness was observed on the surface of the sample.

### (2) Surface Gloss

A test piece (70 mm x 40 mm x 3 mm in thickness) was molded under the following conditions, and the gloss at 45 degrees - 45 degrees reflection of the test piece was measured with the use of a digital variable glossmeter (UGV-40 manufactured by Suga Test Instruments Co., Ltd.) in accordance with the glossmetry specified in JIS K 7105.

The gloss of the surface of each of the test pieces respectively formed with specular and grained molds was measured.
Molding Machine: IS80 manufactured by Toshiba Corp.

| Molding Conditions: | | | | |
|---|---|---|---|---|
| | Nozzle | C1 | C2 | C3 |
| Cylinder Temperature (°C) | 200 | 190 | 180 | 160 |
| Injection Pressure | 650 (kg/cm²) | | | |
| Injection Speed | 1.0 (m/min) | | | |
| Mold Temperature | 80 (°C) | | | |

### (3) Weather Resistance Test

An ultraviolet fadeometer (model FAL-AU-H-B-Em manufactured by Suga Test Instruments Co., Ltd.) was used. Ultraviolet irradiation was conducted at a black panel temperature of 83°C, and the cracking time and the surface condition change were evaluated.

### 1. Cracking Time

The test piece was irradiated with ultraviolet rays under the given conditions, and the surface thereof was observed through a magnifier of 10 magnifications to find if there were any cracks. Thus, the time up to the first occurrence of cracks was measured. The longer the time, the better the performance.

### 2. Surface Condition Change

The test piece was irradiated with ultraviolet rays for predetermined periods of time (600 hr, 1000 hr and 1500 hr) under the given conditions, and the surface thereof was observed to evaluate the changes in hue and crack condition caused by the irradiation. The changes were graded into five ranks, and indicated. The smaller the rank number, the smaller the changes, that is, the discoloration and crack occurrence are less.

### (4) Tensile Test

The tensile strength and elongation were measured in accordance with ASTM D638. The abbreviations employed in the Examples and Comparative Examples were as follows.

| | |
|---|---|
| Ethyl acrylate | EA |
| Methyl methacrylate | MMA |
| Butyl acrylate | BA |
| 1,4-Butylene glycol acrylate | BGA |
| Allyl methacrylate | AlMA |
| Methacrylamide | MAM |
| Nonionic surfactant (Emulgen 950 produced by Kao Corp.) | E950 |
| Oligomeric anionic surfactant | Surfactant A |

The Surfactant A was synthesized in accordance with the procedure described in Example 13 of Japanese Patent Publication-A No. 53-10682, the PH thereof was adjusted to 7.5 with aqueous ammonia, and demineralized water was added to have a solid content of 10%. 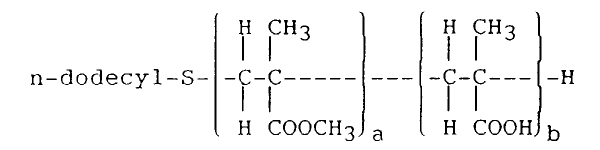 (in the formula, a : b = 7 : 3, and a + b = about 13.6).

| [Formulation] | |
|---|---|
| Methacrylic acid | 155 g |
| MMA | 360 g |
| n-Dodecyl mercaptan | 109 g |
| Azobisisobutyronitrile | 4.4 g |
| Isopropanol | 314 g |
| Molecular weight | 1310) |
| Deionized water | DIW |
| 2,2'-Azobis(2-aminopropane) dihydrochloride (V50 produced by Wako Pure Chemical Industries, Ltd.) | V50 |
| 2-Hydroxyethyl methacrylate | HEMA |
| Styrene | St |
| Glycidyl methacrylate | GMA |

### Production Examples 1 to 3 [production of core-shell polymers C-1 to C-3]

1200 g of DIW, 1.68 g of 25% aqueous ammonia, 7 g of surfactant A and 0.14 g of MAM were charged into a 5-1 polymerization reactor equipped with a reflux condenser, and heated to 70°C while stirring under a nitrogen stream. 27.86 g of a seed monomer mixture having the following formulation was added and dispersed over a period of 10 min. Thereafter, 21 g of a 10% aqueous solution of V50 was added to polymerize seed particles.

| Seed Monomer Mixture | |
|---|---|
| EA | 27.664 g |
| AlMA | 0.14 g |
| BGA | 0.056 g |

Subsequently, 7 g of MAM was added, and a monomer emulsion obtained by mixing 210 g of surfactant A, 900 g of DIW and 2.80 g of 25% aqueous ammonia with 1365 g of a core-part-forming monomer mixture having the following formulation and a mixture of 21.0 g of a 10% aqueous V50 solution and 0.63 g of 1% aqueous ammonia were continuously fed over a period of 180 min to thereby carry out seed polymerization.

| Core-Part-Forming Monomer Mixture | |
|---|---|
| BA | 1215.2 g |
| MMA | 140.0 g |
| BGA | 2.8 g |
| AlMA | 7.0 g |

The mixture was heated to 80°C, aged for 1 hr, and cooled to 70°C.

Subsequently, 9 g of a 10% aqueous V50 solution and 0.27 g of 1% aqueous ammonia were added, and a shell-part-forming emulsion having the following formulation, 12 g of a 10% aqueous V50 solution and 0.36 g of 1% aqueous ammonia were continuously fed over a period of 60 min to achieve seed polymerization.

| Shell-Part-Forming Monomer | |
|---|---|
| MMA | 265.8 g |
| EA | 60.0 g |
| Surfactant A | 30.0 g |
| DIW | 500.0 g |
| 25% aqueous ammonia | 0.72 g |
| St | 180.0 g |
| HEMA | 90.0 g |
| BGA | 1.2 g |
| MAM | 3.0 g |

The mixture was heated to 80°C, aged for 1 hr, cooled, and filtered through a 300-mesh stainless steel gauze, thereby obtaining a core-shell polymer latex.

This latex was frozen at -15°C, filtered through a glass filter and blast dried through a day and night at 60°C, thereby obtaining a core-shell polymer C-1.

Polymerization was performed in the same manner as in Production Example 1, except that monomer mixtures having the compositions shown in Table I were individually employed. Thus, core-shell polymers C-2 and C-3 were obtained.

**Table 1**

| | Monomer Compn. (pt. by wt.) | Core-shell Polymer (designation) | |
|---|---|---|---|
| | | C-2 | C-3 |
| Core Part | BA | 1243.2 | 1250.2 |
| | MMA | 140.0 | 140.0 |
| | BGA | 2.8 | 2.8 |
| | AlMA | 14.0 | 7.0 |
| Shell Part | MMA | 448.8 | 478.8 |
| | EA | 60.0 | 60.0 |
| | GMA | - | 60.0 |
| | HEMA | 90.0 | - |
| | BGA | 1.2 | 1.2 |

35 g of the core-part-forming monomer mixture was used as the seed monomer.

### Example 1

Polyacetal resin (A) [Duracon (trade name) produced by Polyplastics Co., Ltd.] was compounded with the core-shell polymer C-1, each of the weathering stabilizers B-1 and B-3 and the oxyalkylene polymer D-1 produced in the above manner in the formulations indicated in Table 2, mixed by the use of Henschel mixer, and melt kneaded and pelletized by the use of a 30 mm twin-screw extruder. The resultant pelletized compositions were each molded by the use of an injection molding machine into test pieces under the above-mentioned molding conditions. The gloss and other properties of the test pieces were measured and evaluated. The results are shown in Table 2.

### Comparative Example 1

A polyacetal resin composition was obtained in the same manner as in Example 1, except that no oxyalkylene polymer was added to the polyacetal resin. Test pieces were prepared from the polyacetal resin composition in the same manner as above, and evaluated. The results are shown in Table 3.

### Examples 2 to 15

Polyacetal resin compositions were obtained in the same manner as in Example 1, except that the above produced core-shell polymers C-2 and C-3 were employed in the formulations shown in Table 2. Test pieces were prepared from the polyacetal resin compositions in the same manner as above, and evaluated. The results are shown in Table 2.

### Comparative Examples 2 to 12

Polyacetal resin compositions were each prepared in the same manner as in Example 1, except that the polyacetal resin was compounded with a weathering stabilizer or stabilizers and either a core-shell polymer or an oxyalkylene polymer together with or without coloring component (E), as indicated in Table 3, and evaluated. The results are shown in Table 3.

### Notes on Tables 2 & 3:

Note 1
   - B-1:: 2-[2-hydroxy-3,5-bis(α,α-dimethylbenzyl)phenyl]-benzotriazole
   - B-2:: 2-hydroxy-4-oxybenzylbenzophenone
Note 2
   - B-3:: bis(2,2,6,6-tetramethyl-4-piperidyl) sebacate
   - B-4:: polycondensate of dimethyl succinate and 1-(2-hydroxyethyl)-4-hydroxy-2,2,6,6-tetramethylpiperidine
Note 3
   - D-1:: poly(ethylene oxide) [av. mol. wt.: 20,000]
   - D-2:: poly(propylene oxide) [av. mol. wt.: 6,000]
Note 4
   - E-1:: acetylene black
   - E-2:: blue phthalocyanine dye

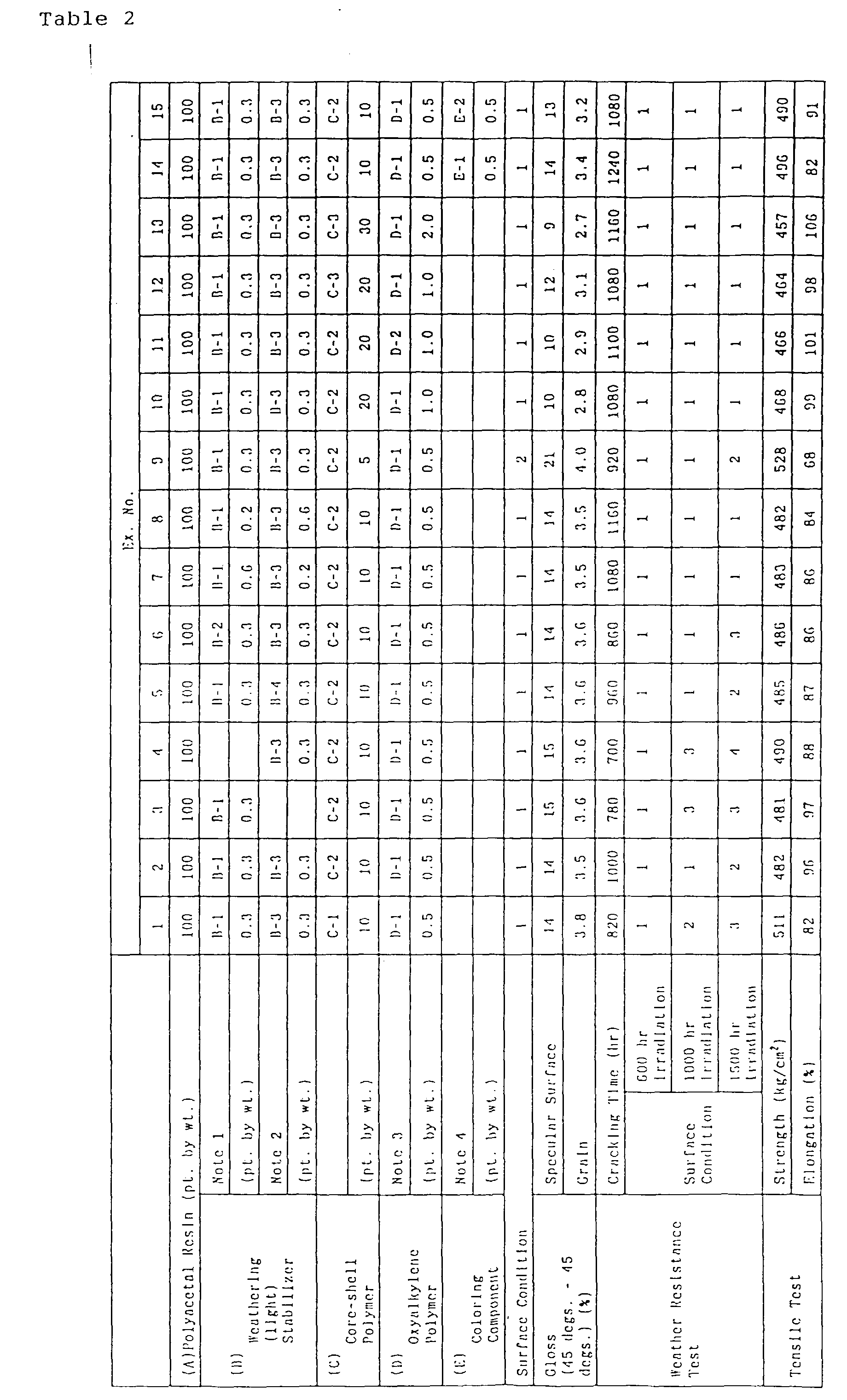

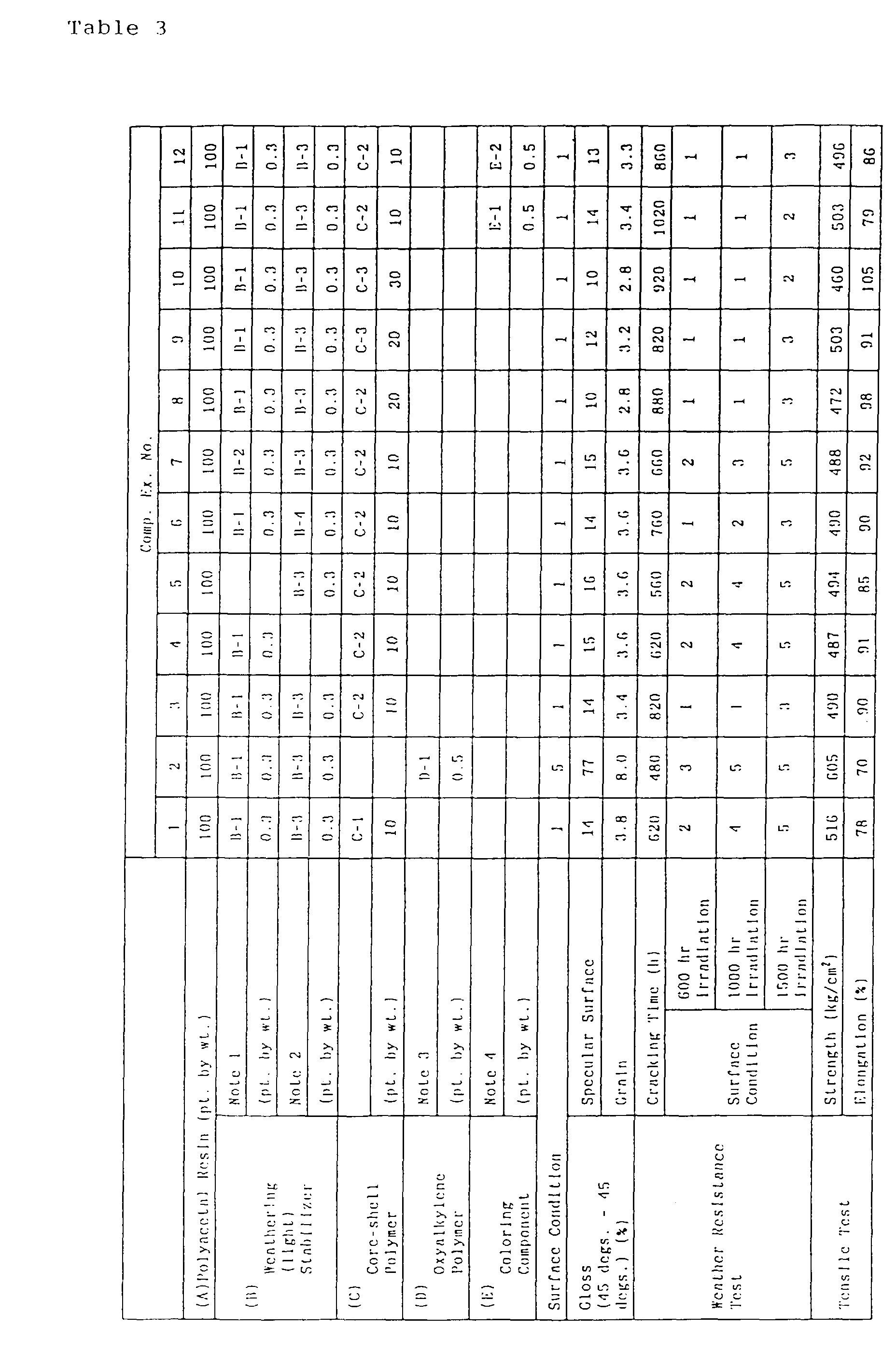

## Claims

1. A weather-resistant polyacetal resin composition having a low gloss comprising:
(A) 100 parts by weight of a polyacetal resin, and compounded therewith,
(B) 0.01 to 5 parts by weight of at least one weathering (light) stabilizer selected from the group consisting of a benzotriazole compound, a benzophenone compound, an oxanilide compound, an aromatic benzoate compound, a cyanoacrylate compound and a hindered amine compound,
(C) 1 to 50 parts by weight of a core-shell polymer comprising a core of a rubber-like polymer and a shell of a glassy polymer comprised of a vinyl copolymer having an oxygen-containing polar group, and
(D) 0.1 to 10 parts by weight of an oxyalkylene polymer having 2 to 8 carbon atoms adjacent to each other in the chain.

2. A composition according to claim 1, wherein said weathering stabilizer as the component (B) comprises a combination of at least one member selected from the group consisting of a benzotriazole compound, a benzophenone compound, an oxanilide compound, an aromatic benzoate compound and a cyanoacrylate compound with a hindered amine compound.

3. A composition according to claim 1 or claim 2, wherein one component of the vinyl copolymer having an oxygen-containing polar group in the core-shell polymer as the component (C) is a (meth)acrylate of an alcohol having two or more oxygen-containing polar groups in its molecule.

4. A composition according to claim 3, wherein the oxygen-containing polar group of the core-shell polymer as the component (C) is a hydroxyl group and/or a glycidyl group.

5. A composition according to claim 3, wherein the (meth)acrylate of an alcohol having two or more oxygen-containing polar groups in its molecule is hydroxyethyl methacrylate or glycidyl methacrylate.

6. A composition according to any of claims 1-5, wherein said core-shell polymer as the component (C) is produced by emulsion polymerization with an oligomeric surfactant.

7. A composition according to any of claims 1-5, wherein said core-shell polymer as the component (C) is produced by emulsion polymerization with a nonionic surfactant.

8. A composition according to any preceding claim, wherein said oxyalkylene polymer as the component (D) is at least one member selected from the group consisting of poly(ethylene oxide), poly(propylene oxide) and ethylene/propylene oxide copolymer.

9. A composition according to any preceding claim, which further comprises 0.1 to 10 parts by weight, based on 100 parts by weight of the polyacetal, of (E) a coloring component.

10. A molded article of a polyacetal resin produced by molding the composition according to any one of claims 1 to 9, which has a surface gloss of 30% or less at 45 degrees - 45 degrees reflection with the use of a digital variable glossmeter (UGV-40 manufactured by Suga Test Instruments Co., Ltd.) in accordance with the glossmetry specified in JIS K 7105 by using a test piece of 70 mm x 40 mm x 3 mm in thickness.

## Patentansprüche

1. Witterungsbeständige Polyacetalharz-Zusammensetzung mit geringem Glanz, umfassend
(A) 100 Gewichtsteile eines Polyacetalharzes und damit kompoundiert
(B) 0,01 bis 5 Gewichtsteile wenigstens eines Bewitterungs(licht)-Stabilisators, der aus der aus einer Benzotriazol-Verbindung, einer Benzophenon-Verbindung, einer Oxanilid-Verbindung, einer aromatischen Benzoat-Verbindung, einer Cyanoacrylat-Verbindung und einer gehinderten Amin-Verbindung bestehenden Gruppe ausgewählt ist,
(C) 1 bis 50 Gewichtsteile eines Kern-Hülle-Polymers, umfassend einen Kern aus einem kautschukartigen Polymer und eine Hülle aus einem glasartigen Polymer, das ein Vinylpolymer mit einer Sauerstoff-enthaltenden, polaren Gruppe umfaßt, und
(D) 0,1 bis 10 Gewichtsteile eines Oxyalkylen-Polymers mit 2 bis 8 Kohlenstoffatomen, die einander benachbart in der Kette vorliegen.

2. Zusammensetzung gemäß Anspruch 1, worin der Bewitterungsstabilisator als Komponente (B) eine Kombination von wenigstens einem Element umfaßt, das aus der aus einer Benzotriazol-Verbindung, einer Benzophenon-Verbindung, einer Oxanilid-Verbindung, einer aromatischen Benzoat-Verbindung, einer Cyanoacrylat-Verbindung mit einer gehinderten Amin-Verbindung bestehenden Gruppe ausgewählt ist.

3. Zusammensetzung gemäß Anspruch 1 oder Anspruch 2, worin eine Komponente des Vinylpolymers, das eine Sauerstoff-enthaltenden, polare Gruppe in dem Kern-Hülle-Polymer als Komponente (C) aufweist, ein (Meth)acrylat eines Alkohols ist, der zwei oder mehr Sauerstoff-enthaltende, polare Gruppen in seinem Molekül aufweist.

4. Zusammensetzung gemäß Anspruch 3, worin die Sauerstoff-enthaltende, polare Gruppe des Kern-Hülle-Polymers als Komponente (C) eine Hydroxylgruppe und/oder eine Glycidylgruppe ist.

5. Zusammensetzung gemäß Anspruch 3, worin das (Meth)acrylat eines Alkohols mit zwei oder mehr Sauerstoff-enthaltenden, polaren Gruppen in seinem Molekül Hydroxyethylmethacrylat oder Glycidylmethacrylat ist.

6. Zusammensetzung gemäß irgendeinem der Ansprüche 1 bis 5, worin das Kern-Hülle-Polymer als Komponente (C) durch Emulsionspolymerisation mit einem oligomeren Tensid hergestellt wird.

7. Zusammensetzung gemäß irgendeinem der Ansprüche 1 bis 5, worin das Kern-Hülle-Polymer als Komponente (C) durch Emulsionspolymerisation mit einem nichtionischen Tensid hergestellt wird.

8. Zusammensetzung gemäß irgendeinem der vorhergehenden Ansprüche, worin das Oxyalkylen-Polymer als Komponente (D) wenigstens ein Element ist, das aus der aus Poly(ethylen)oxid, Poly(propylen)oxid und Ethylen/Propylenoxid-Copolymer bestehenden Gruppe ausgewählt ist.

9. Zusammensetzung gemäß irgendeinem der vorhergehenden Ansprüche, welche weiterhin 0,1 bis 10 Gewichtsteile, bezogen auf 100 Gewichtsteile des Polyacetals, einer färbenden Komponente (E) umfaßt.

10. Geformter Gegenstand aus einem Polyacetalharz, der durch Formen der Zusammensetzung gemäß irgendeinem der Ansprüche 1 bis 9 hergestellt wird, welcher bei der Verwendung eines Teststücks von 70 mm × 40 mmm × 3 mm (Dicke) unter Verwendung eines digitalen, variablen Glanzmeßgeräts (UGV-40, hergestellt von Suga Test Instruments Co., Ltd.) gemäß der in JIS K 7150 vorgegebenen Glanzmessung einen Oberflächenglanz von 30 % oder weniger bei einer Reflexion von 45° -45° hat.

## Revendications

1. Une composition de résine polyacétal résistante aux agents atmosphériques, ayant un faible brillant, comprenant :
(A) 100 parties en poids d'une résine polyacétal et, en mélange avec celle-ci,
(B) 0,01 à 5 parties en poids d'au moins un stabilisant aux agents atmosphériques (à la lumière) choisi dans la classe formée par un dérivé du benzotriazole, un dérivé de la benzophénone, un dérivé de l'oxanilide, un benzoate aromatique, un cyanoacrylate et une amine à empêchement stérique,
(C) 1 à 50 parties en poids d'un polymère à noyau-enveloppe comprenant un noyau d'un polymère caoutchouteux et une enveloppe d'un polymère vitreux constitué d'un copolymère vinylique ayant un groupe polaire oxygéné, et
(D) 0,1 à 10 parties en poids d'un poly(oxyde d'alkylène) dont la chaîne comporte 2 à 8 atomes de carbone adjacents entre eux.

2. Une composition selon la revendication 1, dans laquelle ledit stabilisant aux agents atmosphériques qui est le composant (B) comprend une association d'au moins un membre de la classe formée par un dérivé du benzotriazole, un dérivé de la benzophénone, un dérivé de l'oxanilide, un benzoate aromatique et un cyanoacrylate avec une amine à empêchement stérique.

3. Une composition selon la revendication 1 ou la revendication 2, dans laquelle un constituant du copolymère vinylique ayant un groupe polaire oxygéné dans le polymère à noyau-enveloppe qui est le composant (C) est un (méth)-acrylate d'un alcool dont la molécule contient au moins deux groupes polaires oxygénés.

4. Une composition selon la revendication 3, dans laquelle le groupe polaire oxygéné du polymère à noyau-enveloppe qui est le composant (C) est un groupe hydroxyle et/ou un groupe glycidyle.

5. Une composition selon la revendication 3, dans laquelle le (méth)acrylate d'un alcool dont la molécule contient au moins deux groupes polaires oxygénés est le méthacrylate d'hydroxyéthyle ou le méthacrylate de glycidyle.

6. Une composition selon l'une quelconque des revendications 1 à 5, dans laquelle ledit polymère à noyau-enveloppe qui est le composant (C) est produit par polymérisation en émulsion avec un agent tensio-actif oligomère.

7. Une composition selon l'une quelconque des revendications 1 à 5, dans laquelle ledit polymère à noyau-enveloppe qui est le composant (C) est produit par polymérisation en émulsion avec un agent tensio-actif non ionique.

8. Une composition selon l'une quelconque des revendications précédentes, dans laquelle ledit poly(oxyde d'alkylène) qui est le composant (D) est au moins un membre de la classe formée par un poly(oxyde d'éthylène), un poly(oxyde de propylène) et un copolymère oxyde d'éthylène/oxyde de propylène.

9. Une composition selon l'une quelconque des revendications précédentes, qui contient de plus 0,1 à 10 parties en poids, pour 100 parties en poids du polyacétal, de (E) un composant colorant.

10. Un article moulé en une résine de polyacétal, produit en moulant la composition selon l'une quelconque des revendications 1 à 9, qui présente un brillant de surface de 30 % ou moins par réflexion 45 degrés - 45 degrés en utilisant un brillancemètre numérique variable (UGV-40 fabriqué par Suga Test Instruments Co., Ltd.) selon la mesure de brillant spécifiée dans JIS K 7105 en utilisant une éprouvette de 70 mm × 40 mm × 3 mm d'épaisseur.
